# EUROPÄISCHE PATENTSCHRIFT

(11) **EP 0 530 601 B1**
(45) Veröffentlichungstag und Bekanntmachung des Hinweises auf die Patenterteilung: **02.05.1997**
(21) Anmeldenummer: 92114210.5
(22) Anmeldetag: 20.08.1992
(51) Int. Cl.: G07F 7/10, G06K 19/07

(54) **Elektronisches Gerät zur Durchführung einer Vielzahl von Funktionen**
Multiple function electronic device
Dispositif électronique avec une multiplicité de fonctions

(30) Priorität: 02.09.1991 DE 4129067
(43) Veröffentlichungstag der Anmeldung: 10.03.1993
(73) Patentinhaber: Grundig E.M.V. Elektro-Mechanische Versuchsanstalt Max Grundig GmbH & Co. KG, 90762 Fürth (DE)
(72) Erfinder: Mahmud, Shabaz, Grundig E.M.V. Max Grundig, W-8510 Fürth/Bay (DE)

(56) Entgegenhaltungen:
- EP-A- 0 385 290
- EP-A- 0 440 549
- EP-A- 0 456 548
- WO-A-82/00213
- FR-A- 2 637 710
- US-A- 4 797 542

## Beschreibung

Die Erfindung betrifft ein elektronisches Gerät mit den in den Oberbegriffen der Ansprüche 1 oder 2 angegebenen Merkmalen.

Es ist bekannt, bei elektrischen und elektronischen Geräten das Funktionieren des Geräts oder von Teilfunktionen des Geräts davon abhängig zu machen, daß ein freies Steckerteil verwendet wird, das Bestandteile der im Gerät befindlichen Schaltung, wie z.B. Widerstände, enthält. Wird ein solches freies Steckerteil in das zugehörige Steckerteil am Gerät eingefügt, so wird die Schaltung vervollständigt und die Funktion des Geräts freigegeben. Eine derartige Steckverbindung wird beispielsweise in der DE-PS 35 06 578 beschrieben.

Die Schutzwirkung der Funktionsfreigabe durch solch einfache schaltungstechnische Maßnahmen ist jedoch sehr begrenzt. Außerdem ist die Verlagerung von Schaltungsbestandteilen aus dem Gerät in ein freies Steckerteil nicht immer wünschenswert. Dies wird besonders deutlich, wenn elektronische Geräte betrachtet werden, bei denen der Schaltungsaufbau immer stärker durch die Verwendung von Halbleiterschaltkreisen bestimmt wird, die anwendungsspezifisch hergestellt werden. Die Verwendung dieser sogenannten ASICs zur Realisierung verschiedener Funktionen bietet dem Hersteller u.a. die Möglichkeit, seine Entwicklungen für Nachahmer nahezu unzugänglich zu machen.

Außerdem ist es z.B. von den HiFi-Geräten der H-Serie der Firma Revox bekannt, elektronische Geräte, die mit einer Vielzahl von Funktionen ausgestattet sind, mittels verschiedener Fernbedienungsgeber zu steuern, um je nach verwendetem Fernbedienungsgeber einen Teil oder alle der in den Geräten realisierten Funktionen auslösen zu können. Die Geräte der H-Serie werden beispielsweise in der Zeitschrift STEREO, 12/1990, Seiten 68 - 75, beschrieben.

Bei dieser Art der Funktionsauslösung ist es einerseits nachteilig, daß verschiedene Fernbedienungsgeber hergestellt werden müssen und andererseits, daß diese Fernbedienungsgeber nicht auf die Bedienung eines Geräts beschränkt sind.

Aus der Offenlegungsschrift DE 39 09 323 A1 ist außerdem ein Automat bekannt, bei dem mittels verschiedener kartenförmiger Aufzeichnungsträger eine Beeinflussung des Betriebsablaufes vorgenommen werden kann. So können beispielsweise verschiedene Betriebsparameter abgeändert werden.

Als Nachteil dieses Automaten ist anzusehen, daß verschiedene Datenträgerkarten vorhanden sein müssen, und daß die gezielte, individuelle Bereitstellung einer gewissen Auswahl von Betriebsfunktionen, die einem Benutzer des Automaten zur Verfügung stehen sollen, nicht möglich ist.

Aufgabe der Erfindung ist es deshalb, ein Gerät anzugeben, bei dem es möglich ist, ohne bauliche Unterschiede des jeweiligen elektronischen Geräts Funktionen des Geräts auszuwählen und freizugeben und somit einem Benutzer des Geräts zugänglich zu machen.

Erfindungsgemäß wird diese Aufgabe durch die in den Ansprüchen 1 oder 2 angegebenen Merkmale gelöst. Vorteilhafte Weiterbildungen ergeben sich aus den Unteransprüchen.

Der Vorteil der Erfindung liegt insbesondere darin, daß sich für den Hersteller die Typenvielfalt der produzierten Geräte reduziert. Durch die Auswähl- und Freigebbarkeit von Funktionen mittels einer Datenträgerkarte sind wie bisher verschiedene Gerätetypen anbietbar, jedoch ohne die Notwendigkeit der Produktion verschiedener Typen. Dadurch sinken für den Hersteller die Produktionskosten, da die typenspezifische Herstellung entfällt. Dies ist für die verwendeten hochintegrierten, anwendungsspezifischen Schaltkreise von besonderem Vorteil, da der Herstellungspreis solcher Bauteile stark vom Produktionsumfang abhängt.

Aus der individuell möglichen Auswahl und Freigabe der Funktionen ergeben sich aber auch für die Käufer der Geräte Vorteile, da Geräte erhältlich sind, die bezüglich der Funktionsausstattung exakt ihren Bedürfnissen entsprechen. Es wird daher vermieden, daß Geräte erworben werden müssen, deren Ausstattung für den jeweiligen Anwendungsfall zu aufwendig ist - und damit auch oft zu teuer. Für den Hersteller ergibt sich aus dieser kundengerechten Ausstattung der von ihm produzierten Geräte ein zusätzlicher Informationsgewinn, da er so genau erfahren kann, welche Teilfunktionen der von ihm hergestellten Geräte für seine Kunden von besonderem Interesse sind, so daß er diese gezielt verbessern und weiterbilden kann.

Einen weiteren Vorteil stellt der gute Schutz gegen das unberechtigte Benutzen der Datenträgerkarten durch die Verwendung von Karten- bzw. Gerätenummern dar.

Im folgenden soll anhand einer Figur der Aufbau und die Arbeitsweise eines erfindungsgemäßen Geräts beschrieben werden.

Unter auswählen und freigeben soll nachfolgend verstanden werden, daß eine gewisse Anzahl aus der Vielzahl von Funktionen zur Verfügung gestellt wird. Auslösen bedeutet, daß eine der zuvor freigegebenen Funktionen durch den Benutzer aktiviert und genutzt wird.

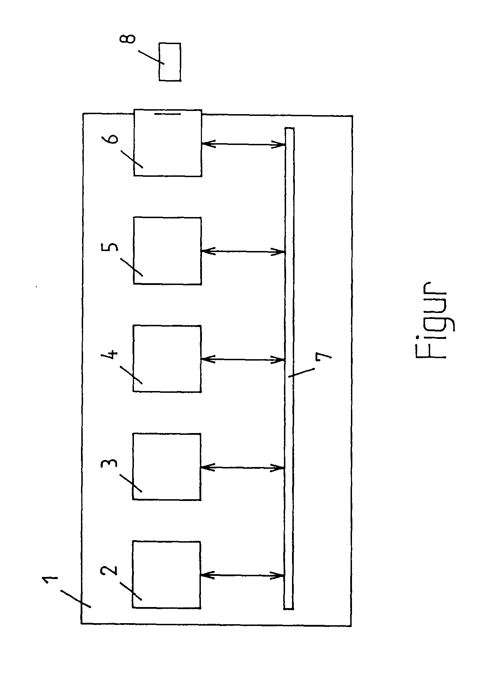

Die Figur zeigt eine mögliche Ausführungsform eines erfindungsgemäßen Geräts.

Das Gerät 1 weist eine Bedieneinrichtung 2 auf, die eine Nahbedienung oder eine Fernbedienung, bestehend aus Fernbedienungsgeber und Fernbedienungsempfänger, sein kann. Weiterhin ist ein Schaltungsaufbau 3 vorhanden, der aus anwendungsspezifischen Schaltkreisen und Standardbauteilen aufgebaut ist und das eigentliche Gerät mit allen vorgesehenen Funktionen darstellt. Desweiteren ist eine Datenträgerkarte 8 vorhanden, mit der die Gerätefunktionen ausgewählt und freigegeben werden können. Dazu werden die Daten der Datenträgerkarte 8 vom Datenträgerkartenabtaster 6 gelesen und in den nichtflüchtigen Speicher 5 geschrieben. Bei der Datenträgerkarte kann es sich z.B. um eine Chipkarte handeln. Der Aufbau von Chipkarten ist beispielsweise in dem Aufsatz "Was sind Chipkarten?", erschienen in ntz, Band 43, 1990, Heft 10, beschrieben.

Ein Beispiel für die Verwendung von Chipkarten, zur Gewährleistung einer gewissen Betriebssicherheit durch die Verwendung von Kennworten, ist in der Offenlegungsschrift DE 38 09 795 A1 beschrieben.

Ein weiteres Beispiel für die Verwendung von Datenträgerkarten ist aus der Offenlegungsschrift FR 2 637 710 A1 bekannt, in der eine Datenträgerkarte beschrieben wird, die für mehrere, verschiedene elektronische Geräte konfiguriert und verwendet werden kann.

Die einzelnen im Gerät 1 befindlichen Bestandteile sind über einen Datenbus 7 verbunden und werden von einem Mikrocomputer 4 gesteuert.

Bei der Herstellung des Geräts 1 wird der Schaltungsaufbau 3 so mit anwendungsspezifischen Schaltkreisen und Standardbauteilen ausgestattet, daß alle vorgesehenen Gerätefunktionen vorhanden sind. Um diese Funktionen tatsächlich nutzen zu können, müssen sie jedoch für den Betrieb ausgewählt und freigegeben werden.

Dies geschieht in der Weise, daß die Daten der freizugebenden Funktionen auf die Datenträgerkarte 8 geschrieben werden. Beim ersten Lesen der Daten der Datenträgerkarte 8 wird neben diesen Daten eine Kartennummer, die unveränderbar auf der Datenträgerkarte 8 gespeichert ist, gelesen und in den nichtflüchtigen Speicher 5 so eingeschrieben, daß sie für die Benutzer des Geräts unzugänglich ist. Desweiteren werden die Daten der freizugebenden Funktionen in den Speicher 5 geschrieben, wodurch ihre Benutzung möglich wird. Durch das Speichern der Kartennummer kann erreicht werden, daß eine Datenträgerkarte nur für ein Gerät verwendet werden kann, da bei jedem erneuten Lesevorgang durch den Mikrocomputer 4 überprüft wird, ob die im Speicher 5 befindliche Kartennummer mit der Kartennummer der momentan im Datenträgerkartenabtaster 6 befindlichen Datenträgerkarte 8 übereinstimmt. Wird eine Datenträgerkarte 8 in den Abtaster 6 eingeführt, deren Kartennummer nicht mit der im Speicher 5 abgelegten Kartennummer übereinstimmt, so ist eine zusätzliche Auswahl und Freigabe von Funktionen nicht möglich. Wahlweise kann auch vorgesehen sein, daß die bisher freigegebenen Funktionen gesperrt werden, oder zumindest ein gewisser Teil der bisher freigegebenen Funktionen.

Bei Auslösen einer bestimmten Funktion, beispielsweise mittels der Bedieneinrichtung 2, wird durch den Mikrocomputer 4 überprüft, ob die der Funktion entsprechenden Daten im Speicher 5 vorhanden sind. Sind die Daten vorhanden, so wird die entsprechende Funktion ausgeführt, wohingegen die Ausführung unterbleibt, falls die Daten dieser bestimmten Funktion nicht vorhanden sind.

Zur Erweiterung der freigegebenen Funktionen wird die Datenträgerkarte aus dem Abtaster 6 entnommen und beim Hersteller oder entsprechend ausgerüsteten Händlern um die Daten der zusätzlich auszuwählenden und freizugebenden Funktionen erweitert. Dafür ist eine bestimmte Gebühr zu entrichten. Während der Entnahme der Datenträgerkarte kann der Betrieb wie gewohnt fortgesetzt werden, da die zur Funktionsfreigabe nötigen Daten im Speicher 5 zur Verfügung stehen.

Um dem Benutzer des Geräts 1 einen Überblick über die freigegebenen und damit zur Verfügung stehenden Funktionen zu ermöglichen, können diese Funktionen auf einer Anzeige oder einem Bildschirm, welche Bestandteile des Geräts 1 sein können, dargestellt werden. Dazu werden die Daten der Datenträgerkarte 8 bzw. des Speichers 5 durch den Mikrocomputer 4 ausgewertet, und ihre Darstellung wird veranlaßt. Zur weiteren Vereinfachung der Bedienung kann es auch vorgesehen sein, die zur Auslösung der freigegebenen Funktionen vorhandenen Schalteinrichtungen der Bedienungseinrichtung 2, beispielsweise durch Beleuchtung, zu kennzeichnen.

Abweichend vom bisher beschriebenen Gerät kann auch ein Aufbau vorgesehen sein, bei dem auf den Speicher 5 verzichtet wird. Das Betreiben des Geräts 1 ist dann allerdings nur möglich, wenn sich die Datenträgerkarte 8 im Abtaster 6 befindet. Deshalb ist der Betrieb des Geräts 1 nicht möglich, wenn z.B. die Datenträgerkarte 8 aus dem Abtaster 6 entnommen wurde, um die Daten zusätzlicher Funktionen einzuschreiben.

Um die Zugehörigkeit einer Datenträgerkarte zu einem Gerät, wie oben beschrieben, zu erreichen, wird die Kartennummer in einem nichtflüchtigen Speicher, der im Gerät enthalten ist, z.B. im Mikrocomputer, gespeichert.

Die Zugehörigkeit einer Datenträgerkarte zu einem Gerät kann aber auch dadurch erreicht werden, daß das Gerät mit einer Gerätenummer versehen wird, welche in einem nichtflüchtigen Speicher im Gerät, z.B. im Mikrocomputer, gespeichert ist und beim ersten Abtastvorgang der Datenträgerkarte durch den Datenträgerkartenabtaster auf diese übertragen wird. Sodann wird die Gerätenummer in einen auf der Datenträgerkarte vorhandenen, nichtflüchtigen Speicher geschrieben. Desweiteren ist es möglich, sowohl Geräte- als auch Kartennummern vorzusehen und auszuwerten.

Eine weitere mögliche Realisierung eines erfindungsgemäßen Geräts kann es sein, daß bei einer Grundausstattung des Geräts auf die Datenträgerkarte verzichtet wird. Bei einem solchen Gerät wird eine gewisse Auswahl aus den vorhandenen Funktionen dadurch freigegeben, daß die entsprechenden Daten in den nichtflüchtigen Speicher 5 eingeschrieben werden, beispielsweise über eine Schnittstelle des Datenbusses. Sollen mehr Funktionen zugänglich gemacht werden, so kann eine Datenträgerkarte, wie oben beschrieben, verwendet werden. Der Mißbrauchsschutz der Karte wird in diesem Fall durch die Speicherung der Gerätenummer auf der Datenträgerkarte erreicht.

Sollte es zum Verlust einer der oben beschriebenen Datenträgerkarten kommen, so kann vom Hersteller, bzw. von einer mit dem Service der Geräte betrauten Person, eine neue Datenträgerkarte mit entsprechender Karten- und/oder Gerätenummer angefertigt werden, da für diesen Personenkreis die im geräteseitigen Speicher gespeicherten Karten- und/oder Gerätenummern zugänglich sind.

## Patentansprüche

1. Elektronisches Gerät zur Durchführung einer Vielzahl von Funktionen, mit
- einer Bedienungseinrichtung (2) zur Auslösung einer der Funktionen,
- einem Schaltungsaufbau (3) mit einem oder mehreren anwendungsspezifischen Schaltkreisen zur Durchführung der Vielzahl von Funktionen,
- einem Mikrocomputer (4),
- einem nichtflüchtigen Speicher (5),
- einem Datenträgerkartenabtaster (6),
- einem die Einheiten (2 bis 6) verbindenden Datenbus (7), und
- einer Datenträgerkarte (8),
**dadurch gekennzeichnet**,
daß mit der Datenträgerkarte (8) eine oder mehrere aus der Vielzahl von Funktionen auswählbar und freigebbar sind,
daß die ausgewählten und freigegebenen Funktionen in den nichtflüchtigen Speicher (5) eingeschrieben werden, wodurch die Auslösung der ausgewählten und freigegebenen Funktionen mittels der Bedienungseinrichtung (2) ermöglicht wird, und
daß die Datenträgerkarte (8) nach dem Einschreiben der ausgewählten und freigegebenen Funktionen in den Speicher (5) entfernt werden kann.

2. Elektronisches Gerät zur Durchführung einer Vielzahl von Funktionen, mit
- einer Bedienungseinrichtung (2) zur Auslösung einer der Funktionen,
- einem Schaltungsaufbau (3) mit einem oder mehreren anwendungsspezifischen Schaltkreisen zur Durchführung der Vielzahl von Funktionen,
- einem Mikrocomputer (4),
- einem Datenträgerkartenabtaster (6),
- einem die Einheiten (2, 3, 4 und 6) verbindenden Datenbus (7), und
- einer Datenträgerkarte (8),
**dadurch gekennzeichnet**,
daß mit der Datenträgerkarte (8) eine oder mehrere aus der Vielzahl von Funktionen auswählbar und freigebbar sind,
daß die Datenträgerkarte (8) in den Datenträgerkartenabtaster (6) eingeführt wird und dort dauerhaft verbleibt, wodurch die mittels der Datenträgerkarte (8) ausgewählten und freigegebenen Funktionen mit der Bedienungseinrichtung (2) ausgelöst werden können.

3. Elektronisches Gerät nach Anspruch 1 oder 2,
**dadurch gekennzeichnet**,
daß im Gerät eine Gerätenummer gespeichert ist, die beim erstmaligen Einführen der Datenträgerkarte (8) in den Datenträgerkartenabtaster (6) in einen Speicher der Datenträgerkarte (8), zwecks späterem Vergleich, eingeschrieben wird.

4. Elektronisches Gerät nach Anspruch 1,
**dadurch gekennzeichnet**,
auf der Datenträgerkarte (8) eine Kartennummer gespeichert ist, die beim ersten Einführen der Datenträgerkarte (8) in den Datenträgerkartenabtaster (6) in den Speicher (5), zwecks späterem Vergleich, eingeschrieben wird.

5. Elektronisches Gerät nach einem oder mehreren der Ansprüche 1 bis 4,
**dadurch gekennzeichnet**,
daß die zur Freigabe der Funktionen auf der Datenträgerkarte (8) vorhandenen Daten veränderbar sind, so daß eine Veränderung der Auswahl der freigegebenen Funktionen erfolgen kann.

6. Elektronisches Gerät nach einem oder mehrern der Ansprüche 1 bis 5,
**dadurch gekennzeichnet**,
daß die zur Auslösung der freigegebenen Funktionen dienenden Bedienungseinrichtungen (2) durch Steuerung des Mikrocomputers (4) kenntlich gemacht werden.

7. Elektronisches Gerät nach einem oder mehreren der Ansprüche 1 bis 6,
**dadurch gekennzeichnet**,
daß auf einer Anzeige und/oder einem Bildschirm des Geräts (1) oder eines damit verbundenen anderen Geräts eine Übersicht der freigegebenen Funktionen angezeigt wird.

## Claims

1. Electronic appliance for carrying out a multiplicity of functions, comprising
- an operating device (2) for activating one of the functions,
- circuitry (3) containing one or more application-specific circuits for carrying out the multiplicity of functions,
- a microcomputer (4),
- a nonvolatile memory (5),
- a data carrier card scanner (6),
- a databus (7) connecting the units (2 to 6), and
- a data carrier card (8),
characterized in that one or more of the multiplicity of functions can be selected and enabled with the data carrier card (8),
in that the selected and enabled functions are written into the nonvolatile memory (5), as a result of which the activation of the selected and enabled functions is made possible by means of the operating device (2), and
in that the data carrier card (8) can be removed after writing the selected and enabled functions into the memory (5).

2. Electronic appliance for carrying out a multiplicity of functions, comprising
- an operating device (2) for activating one of the functions,
- circuitry (3) containing one or more application-specific circuits for carrying out a multiplicity of functions,
- a microcomputer (4),
- a data carrier card scanner (6),
- a databus (7) connecting the units (2, 3, 4 and 6), and
- a data carrier card (8),
characterized in that one or more of the multiplicity of functions can be selected and enabled with the data carrier card (8), and
in that the data carrier card (8) is inserted into the data carrier card scanner (6) and remains there permanently, as a result of which the functions selected and enabled by means of the data carrier card (8) can be activated with the operating device (2).

3. Electronic appliance according to Claim 1 or 2, characterized in that an appliance number which is written, for the purpose of subsequent comparison, into a memory of the data carrier card (8) when the data carrier card (8) is inserted into the data carrier card scanner (6) for the first time is stored in the appliance.

4. Electronic appliance according to Claim 1, characterized in that there is stored on the data carrier card (8) a card number which is written, for the purpose of subsequent comparison, into the memory (5) when the data carrier card (8) is first inserted into the data carrier card scanner (6).

5. Electronic appliance according to one or more of Claims 1 to 4, characterized in that the data present on the data carrier card (8) for enabling the functions are alterable so that the selection of enabled functions can be altered.

6. Electronic appliance according to one or more of Claims 1 to 5, characterized in that the operating devices (2) serving to activate the enabled functions are indicated by the control system of the microcomputer (4).

7. Electronic appliance according to one or more of Claims 1 to 6, characterized in that a summary of the enabled functions is indicated on a display and/or a viewing screen of the appliance (1) or of another appliance connected thereto.

## Revendications

1. Appareil électronique pour l'exécution d'une multiplicité de fonctions, comportant
- un dispositif de commande (2) pour déclencher l'une des fonctions,
- un montage de circuit (3) comportant un ou plusieurs circuits spécifiques à l'utilisation pour l'exécution de la multiplicité de fonctions,
- un micro-ordinateur (4),
- une mémoire non volatile (5),
- un lecteur (6) de cartes de support de données,
- un bus de transmission de données (7) reliant les unités (2 à 6), et
- une carte de support de données (8),
caractérisé en ce
qu'avec la carte de support de données (8) on peut sélectionner ou libérer une ou plusieurs d'une multiplicité de fonctions,
que les fonctions sélectionnées ou libérées sont inscrites dans la mémoire non volatile (5), ce qui permet le déclenchement des fonctions sélectionnées ou libérées à l'aide du dispositif de commande (2), et
qu'après l'inscription des fonctions sélectionnées et libérées dans la mémoire (5), on peut retirer la carte de support de données (8).

2. Appareil électronique pour la mise en oeuvre d'une multiplicité de fonctions comportant
- un dispositif de commande (2) pour déclencher l'une des fonctions,
- un montage (3) comportant un ou plusieurs circuits spécifiques à l'utilisation pour l'exécution de la multiplicité de fonctions,
- un micro-ordinateur (4),
- une mémoire non volatile (5),
- un lecteur (6) de cartes de support de données,
- un bus de transmission de données (7) reliant les unités (2 à 6), et
- une carte de support de données (8),
caractérisé en ce
qu'une ou plusieurs de la multiplicité de fonctions peuvent être sélectionnées ou libérées au moyen de la carte de support de données (8),
que la carte de support de données (8) est introduite dans le lecteur (6) de carte de support de données et y reste en permanence, ce qui a pour effet que les fonctions sélectionnées et libérées au moyen de la carte de support de données (8) peuvent être déclenchées avec le dispositif de commande (2).

3. Appareil électronique selon la revendication 1 ou 2, caractérisé en ce que dans l'appareil est mémorisé un numéro d'appareil, qui lors de la première introduction de la carte de support de données (8) dans le lecteur (6) de cartes de support de données, est inscrit dans une mémoire de la carte de support de données (8), en vue d'une comparaison ultérieure.

4. Appareil électronique selon la revendication 1, caractérisé en ce que sur la carte de support de données (8) est mémorisé un numéro de carte qui, lors de la première introduction de la carte de support de données (8) dans le lecteur (6) de cartes de support de données, est inscrit dans la mémoire (5) en vue d'une comparaison ultérieure.

5. Appareil électronique selon l'une ou plusieurs des revendications 1 à 4, caractérisé en ce que les données présentes sur la carte de support de données (8) pour la libération des fonctions peuvent être modifiées de sorte qu'on peut réaliser une modification de la sélection des fonctions libérées.

6. Appareil électronique selon l'une ou plusieurs des revendications 1 à 5, caractérisé en ce qu'on peut faire connaître les dispositifs de commande (2) utilisés pour le déclenchement des fonctions libérées, au moyen d'une commande du micro-ordinateur (4).

7. Appareil électronique selon l'une ou plusieurs des revendications 1 à 6, caractérisé en ce qu'un aperçu des fonctions libérées est affiché sur un dispositif d'affichage et/ou sur un écran de l'appareil (1) ou d'un autre appareil qui y est raccordé.
